# EUROPEAN PATENT APPLICATION

(11) **EP 0 912 068 A2**
(43) Date of publication of application: **28.04.1999**
(21) Application number: 98106182.3
(22) Date of filing: 03.04.1998
(51) Int. Cl.: H04Q 3/00

(54) **Method for selecting a signaling link**

(30) Priority: 20.10.1997 JP 286366/97
(71) Applicant: FUJITSU LIMITED, Kawasaki-shi, Kanagawa 211-8588 (JP)
(72) Inventor: Nishi, Masahiko, c/o Fujitsu Comm. Systems Ltd., Yokohama-shi, Kanagawa 222-0033 (JP); Fujii, Shinjiro, c/o Fujitsu Comm. Systems Ltd., Yokohama-shi, Kanagawa 222-0033 (JP)
(74) Representative: Ritter und Edler von Fischern, Bernhard, Dipl.-Ing.

(57) **Abstract**

There is provided in accordance with the present invention a method for selecting a signaling link to transmit a message signal in a common channel signaling, comprising the steps of: selecting a signaling link of the message signal based on a signaling link identifier contained in the message signal, and additional data having at least one bit; and transmitting the message signal by using the selected signaling link. With this method, it is possible to increase the number of signaling links depending on the additional data, regardless of a predetermined bit length of the signaling link identifier.

## Description

### BACKGROUND OF THE INVENTION

### Field of the Invention:

The present invention relates to a method of selecting a signaling link in a common channel signaling, and a switch which employs such a method of selecting a signaling link.

### Description of the Prior Art:

The common channel signaling is a protocol for control signals such as for call control between switches in a communication network. In recent years, the introduction of a common channel signaling No. 7 is under way based on a recommendation of International Telegraph and Telephone Consultative Committee (CCITT).

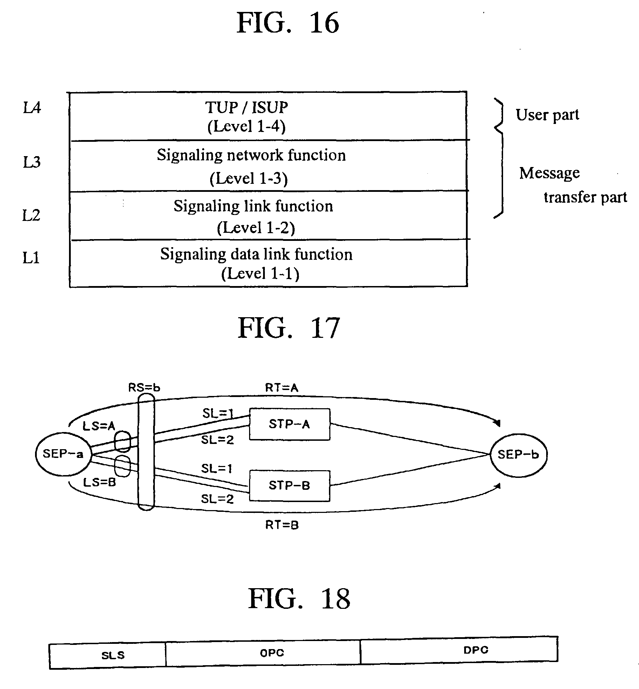

Fig. 16 of the accompanying drawings shows a hierarchical protocol structure of the common channel signaling No. 7. As shown in Fig. 16, the common channel signaling No. 7 is composed of four hierarchical layers including a message transfer part at levels 1 to 3 and a user part at a level 4. The message transfer part comprises a signaling data link function (L1) at the level 1, a signaling link function (L2) at the level 2, and a signaling network function (L3) at the level 3. The user part comprises an ISDN user part (ISUP) for call control in the ISDN (integrated services digital network) and a telephone user part (TUP) exclusive for telephone services.

Fig. 17 of the accompanying drawings shows a common channel signaling network structure in a communication network. In Fig. 17, for transmitting a message signal for call control from an signaling end point SEP-a to an signaling end point SEP-b, it is checked whether a route set (RS=b) that is a bundle of routes from the signaling end point SEP-a to the signaling end point SEP-b can be used or not. In Fig. 17, the routes from the signaling end point SEP-a to the signaling end point SEP-b include a route (RS=A) via a signaling transfer point STP-A and a route (RS=B) via a signaling transfer point STP-B. Specifically, either a link set LS=A which is a bundle of signaling links (SL) from the signaling end point SEP-a to the signaling transfer point STP-A or a link set SS=B which is a bundle of signaling links (SL) from the signaling end point SEP-a to the signaling transfer point STP-B is selected. At this time, one of the link sets which has higher priority for the destination point SEP-b and is free of congestion is selected. Furthermore, either one of two signaling links SL=1, SL=2 of the selected link set LS (the link set LS=A or LS=B) is selected. The message signal is then transmitted to the selected signaling link (SL).

The selection of the signaling link (SL) is performed by the signaling network function (L3) at the level 3 of the common channel signaling. The signaling network function (L3) is capable of selecting a signaling link SL to which a message signal is to be transmitted, from the link sets LS of the same priority for the message signal to travel therethrough to the destination point SEP-b, and sharing the load.

The selected signaling link SL is established in a routing label in a message signal unit of the message signal. Fig. 18 of the accompanying drawings shows a structure of the routing label in the message signal unit. As shown in Fig. 18, the routing label comprises an SLS (signaling link selection), an OPC (originating point code), a DPC (destination point code). The SLS is a signaling link identifier for identifying the signaling link. The selected signaling link SL is established as 4-bit data, for example, in the SLS. The OPC and the DPC contain code data of originating and destination points of the message signal. Codes of the signaling end points SEP-a, SEP-b are established respectively in the OPC and the DPC.

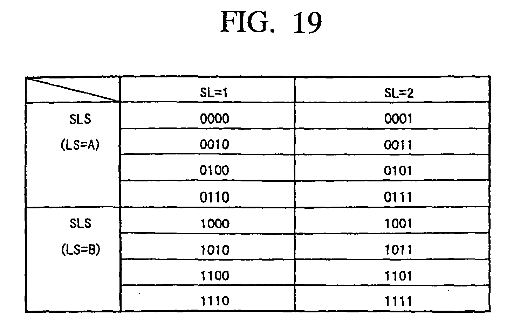

Fig. 19 of the accompanying drawings shows an example of patterns established in the SLS in the communication network shown in Fig. 17. In Fig. 17, there are established four signaling links SL, i.e., two signaling links SL=1, SL=2 for the link set LS=A and two signaling links SL=1, SL=2 for the link set LS=B. In Fig. 19, the SLS is 4 bits long, and 16 patterns of the SLS are established. Therefore, 4 patterns of the SLS are established for each of the four signaling links SL. Stated otherwise, it is possible to establish 16 signaling links SL.

Since the SLS is 4 bits long in the routing label in the message signal unit as stipulated by a recommendation of ITU-T (International Telecommunication Union - Telecommunications), 16 signaling links SL can be defined in the link sets LS of the same priority.

According to a Bellcore recommendation (for north America), the SLS is expanded to 5 bits, and hence 32 signaling links SL can be defined.

Efforts are being made to change the recommendation such that in the level 1 of the common channel signaling shown in Fig. 16, the SLS is 8 bits long if the ATM (asynchronous transmission mode) is applied.

In either of the above recommendations, the bit length of the SLS in the routing label is an element which governs the number of signaling links SL that are selectable for load-sharing. Consequently, if the number of signaling links SL is to be increased to handle increased communication traffic, the bit length of the SLS may be expanded.

Expanding the bit length of the SLS, however, makes it necessary to modify the structure of the message signal unit as stipulated by the above various recommendations. Moreover, it is highly difficult to expand the bit length of the SLS in existing networks because all points need to change the structure of message signals at the same time.

### SUMMARY OF THE INVENTION

It is therefore an object of the present invention to provide a method of selecting a signaling link, the method being capable of establishing the number of signaling links so as to be greater than the number corresponding to the bit length of an SLS as stipulated by various recommendations without modifying the SLS, and a switch which employs such a method of selecting a signaling link.

To achieve the above object, there is provided in accordance with the present invention a method for selecting a signaling link to transmit a message signal in a common channel signaling, comprising the steps of: selecting a signaling link of the message signal based on a signaling link identifier contained in the message signal, and additional data having at least one bit; and transmitting the message signal by using the selected signaling link.

With this method, it is possible to increase the number of signaling links depending on the additional data, regardless of a predetermined bit length of the signaling link identifier.

According to the present invention, the above object can also be achieved by a switch for transmitting a message signal in a common channel signaling, comprising: selecting means for selecting a signaling link for the message signal based on a signaling link identifier contained in the message signal, and additional data having at least one bit.

In the above method and switch, the additional data is used to share a load on signaling links and to ensure a sequence of the message signal. Specifically, the additional data is data which differs depending on a call to be set up and is fixed between during transfer of the message signal.

The additional data may be, for example, at least 1-bit data, contained in the message signal. Specifically, the additional data may be at least 1-bit data representing a destination point code or an originating point code contained in the message signal, or a service indicator contained in the message signal.

Alternatively, the additional data may be at least 1-bit data representing an individual inner code in the switch.

Other features and advantages of the present invention will become readily apparent from the following description when taken in conjunction with the accompanying drawings.

### BRIEF DESCRIPTION OF THE DRAWINGS

The accompanying drawings, which are incorporated in and constitute a part of the specification, illustrate presently preferred embodiments of the invention, and together with the general description given above and the detailed description of the preferred embodiments given below, serve to explain the principle of the invention, in which:
Fig. 1 is a block diagram of a common channel signaling according to a first embodiment of the present invention;
Fig. 2 is a diagram showing the manner in which an SLS and an expanded SLS are combined with each other in the common channel signaling according to the first embodiment;
Fig. 3 is a diagram of selectable patterns of signaling links SL corresponding to the data representing the combination of the SLS and the expanded SLS in the common channel signaling according to the first embodiment;
Fig. 4 is a block diagram of a common channel signaling according to a second embodiment of the present invention;
Fig. 5 is a diagram showing the manner in which an SLS and an expanded SLS are combined with each other in the common channel signaling according to the second embodiment;
Fig. 6 is a diagram of selectable patterns of signaling links SL corresponding to the data representing the combination of the SLS and the expanded SLS in the common channel signaling according to the second embodiment;
Fig. 7 is a block diagram of a common channel signaling according to a third embodiment of the present invention;
Fig. 8 is a diagram illustrating defined details of an SI (service indicator);
Fig. 9 is a diagram showing the manner in which an SLS and an expanded SLS are combined with each other in the common channel signaling according to a third embodiment of the present invention;
Fig. 10 is a diagram of selectable patterns of signaling links SL corresponding to the data representing the combination of the SLS and the expanded SLS in the common channel signaling according to the third embodiment;
Fig. 11 is a block diagram of a common channel signaling according to a fourth embodiment of the present invention;
Fig. 12 is a diagram showing the manner in which an SLS and an expanded SLS are combined with each other in the common channel signaling according to the fourth embodiment;
Fig. 13 is a diagram of selectable patterns of signaling links SL corresponding to the data representing the combination of the SLS and the expanded SLS in the common channel signaling according to the fourth embodiment;
Fig. 14 is a flowchart of a process of selecting a signaling link according to the present invention;
Fig. 15 is a block diagram of an point or switch which carries out the process of selecting a signaling link;
Fig. 16 is a diagram showing a hierarchical protocol structure of a common channel signaling No. 7;
Fig. 17 is a diagram showing a common channel signaling network structure in a communication network;
Fig. 18 is a diagram showing a structure of a routing label in a message signal unit; and
Fig. 19 is a diagram showing established patterns of a conventional SLS.

### DETAILED DESCRIPTION OF THE PREFERRED EMBODIMENTS

Like or corresponding parts are denoted by like or corresponding reference characters throughout views.

According to the present invention, as described in detail below, an OPC (originating point code) or a DPC (destination point code) in a routing label in a message signal unit, an SI (service indicator) contained in a message signal unit, or an individual inner code in a switch, e.g., an signaling end point or a signaling transfer point, is partly used as an expanded SLS (signaling link selection), and the number of signaling links SL is increased on the basis of data representing a combination of the an expanded SLS and the original SLS, which is a signaling link identifier, in the routing label according to a method of selecting a signaling link SL.

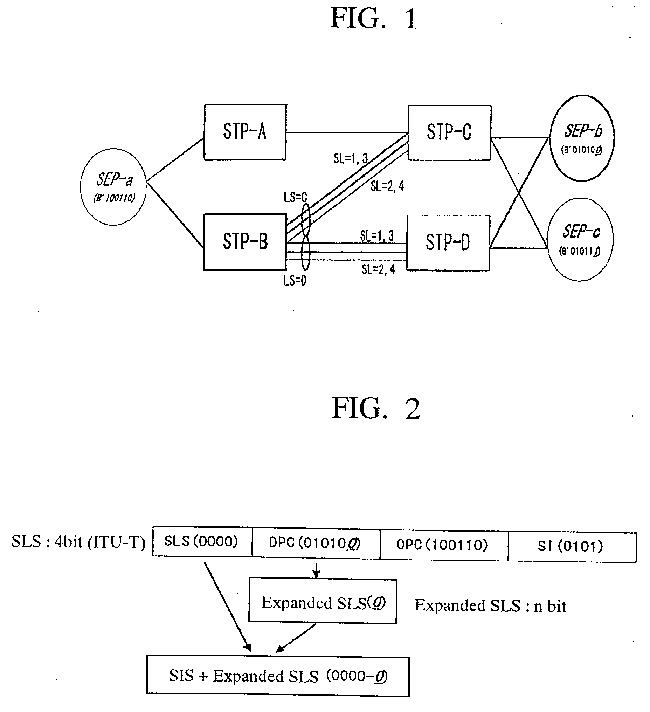

Fig. 1 shows in block form a common channel signaling according to a first embodiment of the present invention. According to the first embodiment, a DPC (destination point code) is used as an expanded SLS.

As shown in Fig. 1, signaling transfer points STP-A, STP-B, STP-C, STP-D are connected to transfer paths interconnecting an signaling end point SEP-a that is an originating point and signaling end points SEP-b, SEP-c that are destination points. In the first embodiment, a method of selecting a signaling link (SL) at the signaling transfer point STP-B will be described below.

The signaling transfer point STP-B receives a message signal from the signaling end point SEP-a. For transmitting the message signal to the destination point (SEP-b or SEP-c), the signaling transfer point STP-B selects either a link set LS=C or a link set LS=D based on priority or a congested state. In the first embodiment, each of the link sets LS=C, LS=D has four signaling links SL=1, 2, 3, 4, and hence link sets LS=C, LS=D have a total of 8 signaling links SL. It is assumed that the signaling transfer point STP-B selects the link set LS=C.

In Fig. 1, each of the signaling end points has an inherent 6-bit identification code of its own. The number of bits of the identification code varies with recommendations. For example, ITU-T specifies 14 bits for the identification code. As shown in Fig. 1, the identification code of the signaling end point SEP-a is "100110", the identification code of the signaling end point SEP-b is "010100", and the identification code of the signaling end point SEP-c is "010111". The DPC in a routing label contains the identification code of a destination point.

For transmitting message signals from the signaling end point SEP-a to the signaling end points SEP-b, SEP-c, therefore, the DPCs in the routing labels of the message signals contain different identification codes. Consequently, even if the SLSs in the routing labels are the same as each other, the signal traffic load can be shared further depending on the destination point to which a message signal is to be transmitted, using the DPC as an expanded SLS. According to the first embodiment, a low-order bit of the DPC is used as an expanded SLS.

Fig. 2 shows the manner in which an SLS and an expanded SLS are combined with each other in the common channel signaling according to the first embodiment. As shown in Fig. 2, the SLS in a routing label comprises 4 bits according to the recommendation of ITU-T, for example, and may be "0000", for example. When the destination point to which a message signal is transmitted from the signaling end point SEP-a is the signaling end point SEP-b in Fig. 1, the DPC is "010111" and the OPC is "100110". The SI, described later on, is "0101".

At this time, the signaling transfer point STP-B selects a signaling link SL based on a 5-bit code "00000" which comprises the SLS and a low-order bit (i.e., "0") of the DPC in the routing label in the received message signal.

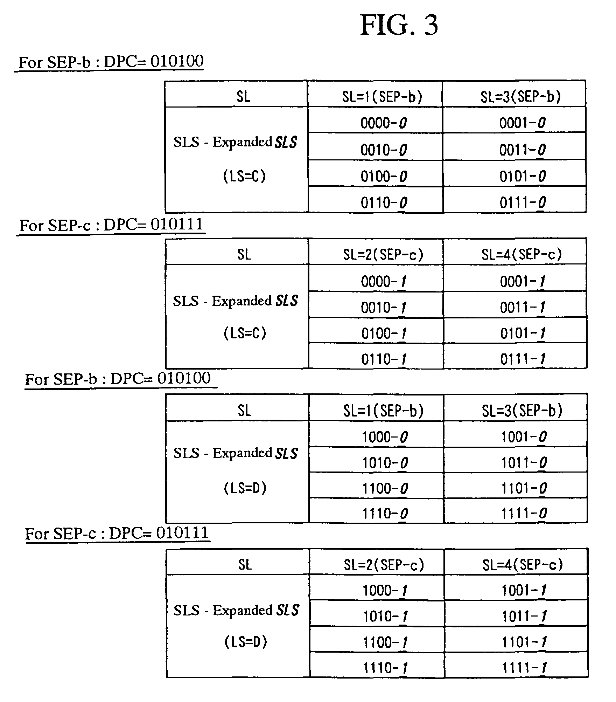

Fig. 3 shows selectable patterns of signaling links SL corresponding to the 5-bit code which comprises the SLS and the low-order bit of the DPC. As shown in Fig. 3, it is possible to establish 16 signaling links SL for each of the link sets LS=C, LS=D, i.e., a total of 32 signaling links SL for the link sets LS=C, LS=D.

In each of the link sets LS, different signaling links SL are assigned depending on the low-order bit of the DPC. Specifically, in the link set LS=C, when the destination point to which the message signal is to be transmitted is the signaling end point SEP-b, the signaling links SL=1, SL=3 are assigned, and when the destination point to which the message signal is to be transmitted is the signaling end point SEP-c, the signaling links SL=2, SL=4 are assigned. Therefore, even when the 4-bit SLSs in the routing labels are the same as each other, if the message signals are transmitted to different destination points and hence the low-order bits of the DPCs in the routing labels are different from each other, then different signaling links are selected, and hence the signal traffic load is shared.

In Fig. 3, if the SLS is "0000" and the destination point to which the message signal is to be transmitted is the signaling end point SEP-b, then the signaling link SL=1 is selected, and if the SLS is "0000" and the destination point to which the message signal is to be transmitted is the signaling end point SEP-c, then the signaling link SL=2 is selected.

Heretofore, since the SLS is 4 bits long, the number of signaling links SL that can be established is 16 at maximum. According to this embodiment, however, it is possible to establish 32 signaling links SL, twice as many as the conventional number of signaling links SL that can be established.

The expanded SLS is not limited to the low-order bit of the DPC, but may be more bits (n bits) or an intermediate-order bit or bits other than the low-order bit or bits, insofar as it represents different data for a different destination point.

By increasing the number of bits of the SLS, it is possible to increase the number of signaling links SL in one point (switch), without upper limits.

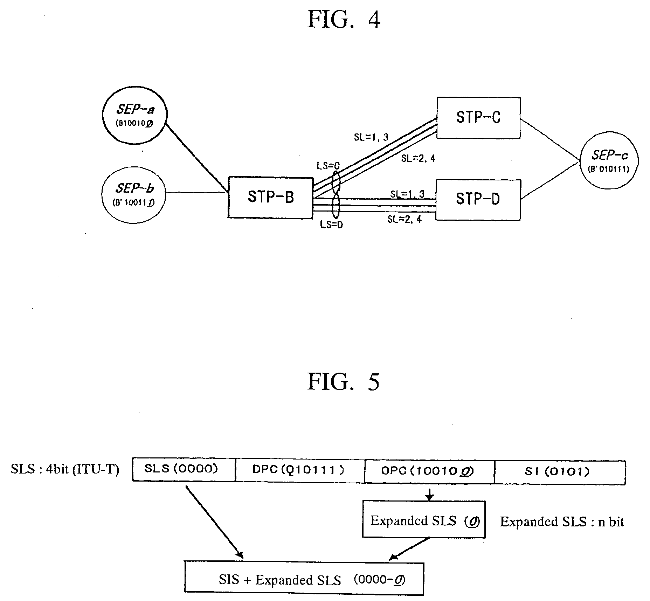

Fig. 4 shows in block form a common channel signaling according to a second embodiment of the present invention. According to the second embodiment, an OPC (originating point code) is used as an expanded SLS.

As shown in Fig. 4, signaling transfer points STP-B, STP-C, STP-D are connected to transfer paths inter-connecting signaling end points SEP-a, SEP-b that are originating points and an signaling end point SEP-c that is a destination point. In the second embodiment, a method of selecting a signaling link (SL) at the signaling transfer point STP-B will be described below.

The signaling transfer point STP-B receives a message signal from the signaling end point SEP-a, and transmits the message signal to the signaling end point SEP-c. As with the first embodiment, each of the link sets LS=C, LS=D has four signaling links SL=1, 2, 3, 4, and hence link sets LS=C, LS=D have a total of 8 signaling links SL. It is assumed that the signaling transfer point STP-B selects the link set LS=C.

According to the second embodiment, the OPC in a routing label in a message signal unit is used as an expanded SLS in addition to the SLS in the message signal unit, thereby increasing the number of signaling links SL that can be established. Specifically, as shown in Fig. 4, the identification code of the signaling end point SEP-a is "100100", the identification code of the signaling end point SEP-b is "100111", and the identification code of the signaling end point SEP-c is "010111". The OPC in a routing label contains the identification code of a destination point.

For transmitting message signals from the signaling end points SEP-a, SEP-b to the signaling end point SEP-c, therefore, the OPCs in the routing labels of the message signals contain different identification codes. Consequently, even if the SLSs in the routing labels are the same as each other, the signal traffic load can be shared further depending on the originating point from which a message signal is to be transmitted, using the OPC as an expanded SLS. According to the second embodiment, a low-order bit of the OPC is used as an expanded SLS.

Fig. 5 shows the manner in which an SLS and an expanded SLS are combined with each other in the common channel signaling according to the second embodiment. As shown in Fig. 5, the SLS in a routing label comprises 4 bits according to the recommendation of ITU-T, for example, and may be "0000", for example. When the originating point which has transmitted a message signal received by the signaling transfer point SEP-B is the signaling end point SEP-a in Fig. 4, the OPC is "100100".

At this time, the signaling transfer point STP-B selects a signaling link SL based on a 5-bit code "00000" which comprises the SLS and a low-order bit (i.e., "0") of the OPC in the routing label in the received message signal.

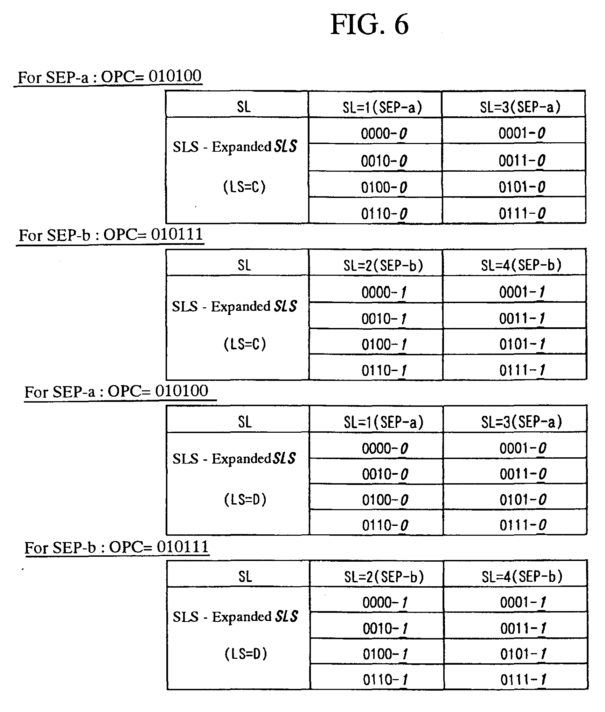

Fig. 6 shows selectable patterns of signaling links SL corresponding to the 5-bit code which comprises the SLS and the low-order bit of the OPC. As shown in Fig. 6, it is possible to establish 16 signaling links SL for each of the link sets LS=C, LS=D, i.e., a total of 32 signaling links SL for the link sets LS=C, LS=D.

In each of the link sets LS, different signaling links SL are assigned depending on the low-order bit of the OPC. Specifically, in the link set LS=C, when the originating point from which the message signal is to be transmitted is the signaling end point SEP-a, the signaling links SL=1, SL=3 are assigned, and when the originating point from which the message signal is to be transmitted is the signaling end point SEP-b, the signaling links SL=2, SL=4 are assigned. Therefore, even when the 4-bit SLSs in the routing labels are the same as each other, if the message signals are transmitted from different originating points and hence the low-order bits of the OPCs in the routing labels are different from each other, then different signaling links are selected, and hence the signal traffic load is shared.

In Fig. 6, if the SLS is "0000" and the originating point from which the message signal is to be transmitted is the signaling end point SEP-a, then the signaling link SL=1 is selected, and if the SLS is "0000" and the originating point from which the message signal is to be transmitted is the signaling end point SEP-b, then the signaling link SL=2 is selected.

According to the second embodiment, it is possible to increase the number of signaling links SL to a value greater than possible with the conventional process. The expanded SLS is not limited to the low-order bit of the OPC, but may be more bits (n bits) or an intermediate-order bit or bits other than the low-order bit or bits, insofar as it represents different data for a different originating point.

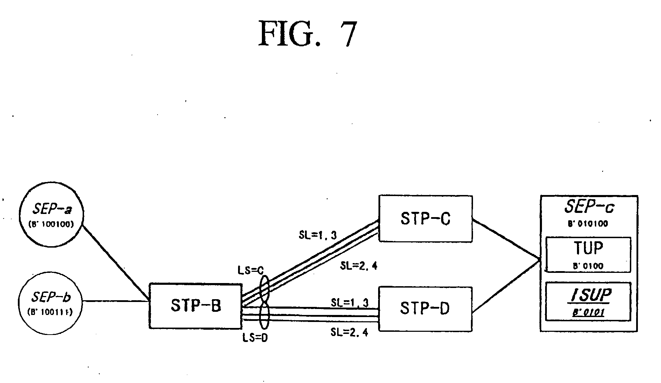

Fig. 7 shows in block form a common channel signaling according to a third embodiment of the present invention. According to the third embodiment, an SI (service indicator) is used as an expanded SLS.

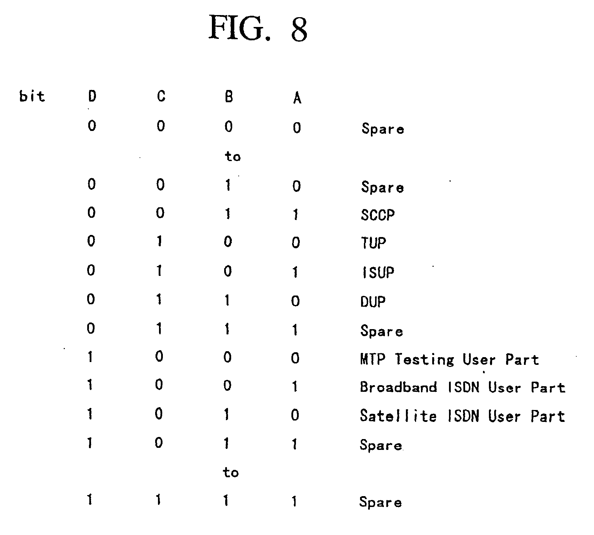

The SI is an element for the level 3 of the common channel signaling No. 7 to identify a higher-level application, and is defined according to ITU-T as shown in Fig. 8.

As shown in Fig. 7, signaling transfer points STP-B, STP-C, STP-D are connected to transfer paths interconnecting signaling end points SEP-a, SEP-b that are originating points and an signaling end point SEP-c that is a destination point. In the third embodiment, a method of selecting a signaling link (SL) at the signaling transfer point STP-B will be described below.

According to the third embodiment, the SI in a message signal unit is used as an expanded SLS in addition to the SLS in the message signal unit, thereby increasing the number of signaling links SL that can be established.

Even if the SLSs in the routing labels in message signal units are the same as each other, the signal traffic load can be shared further for each of the SIs, using the SI as an expanded SLS. According to the third embodiment, a low-order bit of the SI is used as an expanded SLS.

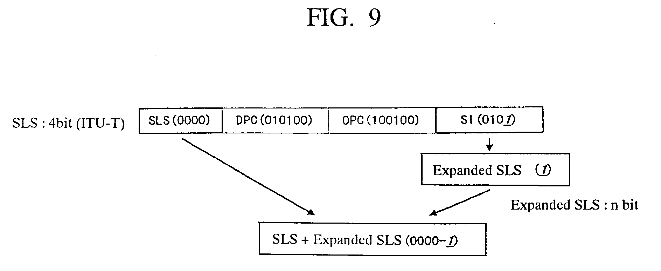

Fig. 9 shows the manner in which an SLS and an expanded SLS are combined with each other in the common channel signaling according to the third embodiment. As shown in Fig. 9, the SLS in a routing label comprises 4 bits according to the recommendation of ITU-T, for example, and may be "0000", for example. The SI in the message signal unit is "0101" indicating ISUP.

At this time, the signaling transfer point STP-B selects a signaling link SL based on a 5-bit code "00001" which comprises the SLS and a low-order bit (i.e., "1") of the SI in the routing label in the received message signal.

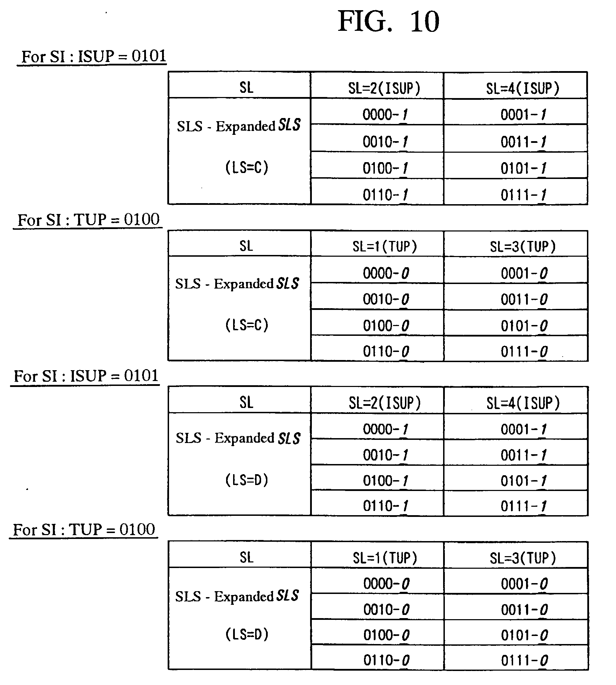

Fig. 10 shows selectable patterns of signaling links SL corresponding to the 5-bit code which comprises the SLS and the low-order bit of the SI. As shown in Fig. 10, it is possible to establish 16 signaling links SL for each of the link sets LS=C, LS=D, i.e., a total of 32 signaling links SL for the link sets LS=C, LS=D.

In each of the link sets LS, different signaling links SL are assigned depending on the low-order bit of the SI. Specifically, in the link set LS=C, when the low-order bit of the SI is "1", e.g., when the SI represents ISUP, the signaling links SL=2, SL=4 are assigned, and when the low-order bit of the SI is "0", e.g., when the SI represents TUP, the signaling links SL=1, SL=3 are assigned. Therefore, even when the 4-bit SLSs in the routing labels are the same as each other, if the low-order bits of the SIs in the routing labels are different from each other, then different signaling links are selected, and hence the signal traffic load is shared.

If the SLS is "0000" in Fig. 10, then when the SI represents ISUP, the signaling link SL=2 is selected, and when the SI represents TUP, the signaling link SL=1 is selected.

According to the third embodiment, it is possible to increase the number of signaling links SL to a value greater than possible with the conventional process. The expanded SLS is not limited to the low-order bit of the SI, but may be more bits (n bits) or an intermediate-order bit or bits other than the low-order bit or bits, insofar as it represents different data depending on the user part of the level 4.

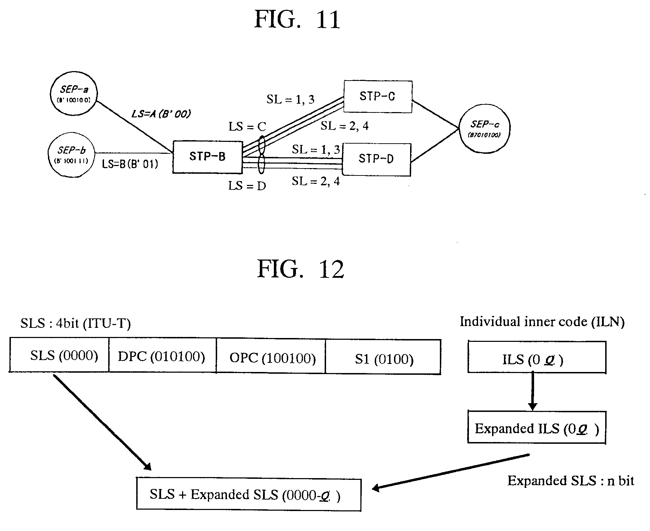

Fig. 11 shows in block form a common channel signaling according to a fourth embodiment of the present invention. According to the fourth embodiment, an ILS (incoming link set) which is one of individual inner codes in switch (point) is used as an expanded SLS.

The individual inner codes are inner codes which are established individually in each switch. The ILS is the individual inner code in an signaling end point or a signaling transfer point, and represents the number of a link set LS in an incoming message signal.

As shown in Fig. 11, signaling transfer points STP-B, STP-C, STP-D are connected to transfer paths inter-connecting signaling end points SEP-a, SEP-b that are originating points and an signaling end point SEP-c that is a destination point. In the fourth embodiment, a method of selecting a signaling link (SL) at the signaling transfer point STP-B will be described below.

In Fig. 11, a message signal from the originating point SEP-a passes through the link set LS=A and is received by the signaling transfer point STP-B, and a message signal from the originating point SEP-b passes through the link set LS=B and is received by the signaling transfer point STP-B. The ILS of the link set LS=A in the signaling transfer point STP-B is defined as "00", and the ILS of the link set LS=B in the signaling transfer point STP-B is defined as "01".

According to the fourth embodiment, the ILS is used as an expanded SLS in addition to the SLS in the message signal unit, thereby increasing the number of signaling links SL that can be established.

Even if the SLSs in the routing labels in message signal units are the same as each other, the signal traffic load can be shared further for each of the ILSs, using the ILS as an expanded SLS. According to the fourth embodiment, a low-order bit of the ILS is used as an expanded SLS.

Fig. 12 shows the manner in which an SLS and an expanded SLS are combined with each other in the common channel signaling according to the fourth embodiment. As shown in Fig. 12, the SLS in a routing label comprises 4 bits according to the recommendation of ITU-T, for example, and may be "0000", for example. The ILS is "00" indicating the link set LS=A.

At this time, the signaling transfer point STP-B selects a signaling link SL based on a 5-bit code "00000" which comprises the SLS in the routing label in the received message signal and a low-order bit (i.e., "0") of the ILS.

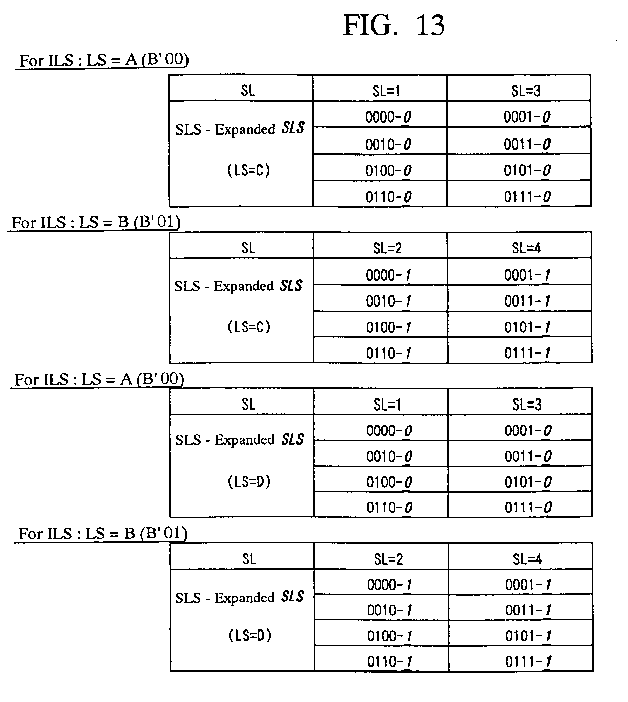

Fig. 13 shows selectable patterns of signaling links SL corresponding to the 5-bit code which comprises the SLS and the low-order bit of the ILS. As shown in Fig. 13, it is possible to establish 16 signaling links SL for each of the link sets LS=C, LS=D, i.e., a total of 32 signaling links SL for the link sets LS=C, LS=D.

In each of the link sets LS, different signaling links SL are assigned depending on the low-order bit of the ILS. Specifically, in the link set LS=C, when the low-order bit of the ILS is "0", i.e., when the signaling transfer point STP-B has received a message signal from the link set LS=A, the signaling links S1=1, SL=3 are assigned, and when the low-order bit of the ILS is "1", i.e., when the signaling transfer point STP-B has received a message signal from the link set LS=B, the signaling links S1=2, SL=4 are assigned. Therefore, even when the 4-bit SLSs in the routing labels are the same as each other, if the low-order bits of the ILSs in the routing labels are different from each other, then different signaling links are selected, and hence the signal traffic load is shared.

If the SLS is "0000" in Fig. 13, then when the signaling transfer point STP-B has received a message signal from the link set LS=A, the signaling link SL=1 is selected, and when the signaling transfer point STP-B has received a message signal from the link set LS=B, the signaling link SL=2 is selected.

According to the fourth embodiment, it is possible to increase the number of signaling links SL to a value greater than possible with the conventional process. The expanded SLS is not limited to the low-order bit of the ILS, but may be more bits (n bits) or an intermediate-order bit or bits other than the low-order bit or bits, insofar as it represents different data depending on the incoming link set LS.

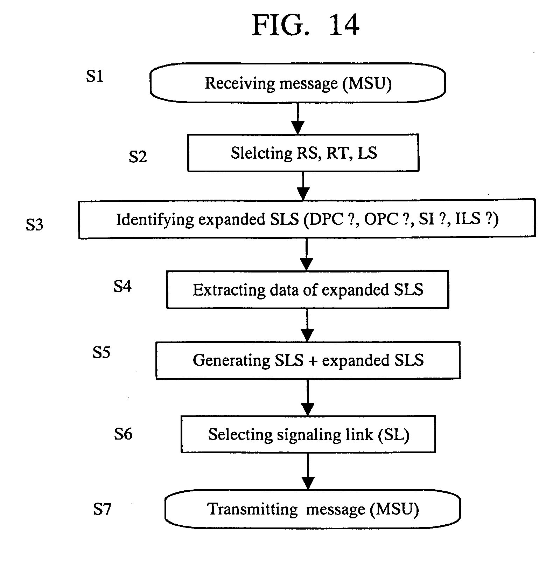

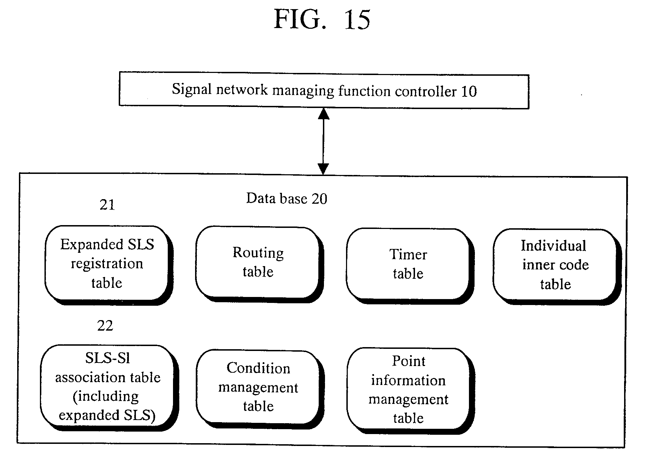

Fig. 14 shows a process of selecting a signaling link SL in the common channel signaling according to the first through fourth embodiments of the present invention. Fig. 15 shows in block form the functions in an signaling end point or a signaling transfer point (hereinafter referred to as an "point") which carries out the process of selecting a signaling link SL. In Fig. 15, each point has a signal network managing function controller 10 which is implemented by a memory that stores a program for the selecting process and a processing unit such as a CPU that runs the program. Each point also has a database 20 which stores an expanded SLS registration table 21, an SLS-SL (signaling link) association table 22, and other tables of data required for various signal processing modes.

In Fig. 14, an point receives a message in a step S1. In a step S2, the point selects a route set RS, a route RT, and a link set LS. In a step S3, the point identifies the type of an expanded SLS. Specifically, the point identifies either one of the low-order bit data of the OPC, the DPC, the SI, or the ILS described above. Optimum data in the network can arbitrarily be set to the expanded SLS, and registered in the expanded SLS registration table 21 shown in Fig. 15.

In a step S4, the point extracts corresponding data from the message signal unit based on the data registered in the expanded SLS registration table 21. The extracted data does not lose its original data function.

In a step S5, the point combines the original SLS in the message signal and the extracted data, i.e., the expanded SLS. The combined data is used only in the point, and the original SLS in the message signal is not edited or modified.

In a step S6, the point selects a signaling link SL based on the combined data. Specifically, the SLS-SL association table 22 in the database 20 shown in Fig. 15 stores patterns of the combined data and the corresponding signaling links as shown in Figs. 3, 6, 10, and 13. The signal network managing function controller 10 selects a signaling link SL for the message signal to be transmitted, based on the SLS-SL association table 22. In a step S7, the point transmits the message signal using the selected signaling link SL.

The data that can be used as an expanded SLS is not limited to the DPC, the OPC, the SI, and the ILS described above in the above embodiments. Data can be used as an expanded SLS if (1) it can share the load on signaling links SL and (2) can ensure the sequence of message signals.

Specifically, the data which can share the load on signaling links SL is data whose details or contents differ depending on a call to be set up. For example, even if data whose contents remain unchanged, e.g., data whose contents are always "0", for different calls to be set up is added to an SLS, the number of signaling links SL cannot be increased, and hence the load on signaling links SL cannot be shared. Consequently, it is necessary to select data whose details or contents vary depending on a call to be set up, as an expanded SLS.

The data which can ensure the sequence of message signals is data whose details or contents remain unchanged, i.e., are fixed, between points which transmit and receive a message signal. For example, if a call is set up between an originating user and a destination user, then message signals for call control are transmitted at appropriate times while the call is being set up. If data whose contents vary while message signals are being relayed is used as an expanded SLS, then a different signaling link SL may possibly be selected for each message signal transmitted. When this happens, a signaling link SL which is congested may be selected for a previously transmitted message signal, and another signaling link SL which is not congested may be selected for a subsequently transmitted message signal. In this case, the previously transmitted message signal may be delayed in its relayed transmission, and the subsequently transmitted message signal may reach the destination earlier than the previously transmitted message signal.

To avoid the above trouble, it is necessary to select data whose contents remain unchanged while message signals are being transmitted and received, as an expanded SLS, so that the same signaling link SL will be assigned to message signals for a call that is set up.

The expanded SLS is not limited to the DPC, the OPC, the SI, and the ILS, but may be data contained in message signals other than the DPC, the OPC, and the SI. When the individual inner code is used as an expanded code SLS, the expanded SLS is not limited to the ILS, but may be an IRS (incoming route set, i.e., an incoming route set number in the point), an IRT (incoming route, i.e., an incoming route number in the point), an ILS (incoming link set, i.e., an incoming link set number in the point), or an ISL (incoming signaling link, i.e., an incoming signaling link number in the point).

The process of selecting a signaling link in the signaling transfer point STP-B has been described above each of the illustrated embodiments. However, the process of selecting a signaling link may be carried out in any of other signaling transfer points and signaling end points.

With the arrangement of the present invention, as described above, a signaling link is selected on the basis of data representing a combination of an SLS in a routing label in a message signal and an expanded SLS for thereby increasing the number of signaling numbers that can be established.

The number of signaling links can be increased, practically without upper limits, depending on the bit length of the expanded SLS regardless of the bit length of the original SLS.

Since signaling links can be increased in number in existing switches, without increasing the number of switches, an enhanced cost performance rating can be achieved in the construction of networks.

The combined data is used only in points, and the data extracted as an expanded SLS does not lose its original data function. Therefore, it is possible to share the load on signaling links without modifying the structure of message signals.

Although certain preferred embodiments of the present invention have been shown and described in detail, it should be understood that various changes and modifications may be made therein without departing from the scope of the appended claims.

## Claims

1. A method for selecting a signaling link to transmit a message signal in a common channel signaling, comprising the steps of:
selecting a signaling link for the message signal based on a signaling link identifier contained in the message signal, and additional data having at least one bit; and
transmitting the message signal by using the selected signaling link.

2. The method according to claim 1, wherein the additional data is used to share a load on signaling links and to ensure a sequence of the message signal.

3. The method according to claim 2, wherein the additional data is data which differs depending on a call to be set up and is fixed during transfer of the message signal.

4. The method according to claims 1, wherein the additional data is contained in the message signal.

5. The method according to claim 4, wherein the additional data is at least 1-bit data representing a destination point code or an originating point code contained in the message signal.

6. The method according to claim 4, wherein the additional data is at least 1-bit data representing a service indicator contained in the message signal.

7. The method according to claims 1, wherein the additional data is at least 1-bit data representing an individual inner code in a switch.

8. A switch for transmitting a message signal in a common channel signaling, comprising:
selecting means for selecting a signaling link for the message signal based on a signaling link identifier contained in the message signal, and additional data having at least one bit; and
transmitting means for transmitting the message signal by using the selected signaling link.

9. The switch according to claim 8, further comprising:
a database storing a first table containing types of data for use as the additional data and a second table containing signaling links corresponding to the signaling link identifier and the additional data; and
wherein the selecting means selects the additional data based on the first table and selects the signaling link based on the second table.

10. The switch according to claim 8, wherein the additional data is used to share a load on signaling links and to ensure a sequence of the message signal.

11. The switch according to claim 10, wherein the additional data is data which differs depending on a call to be set up and is fixed during transfer of the message signal.

12. The switch according claims 8, wherein the additional data is contained in the message signal.

13. The switch according to claim 12, wherein the additional data is at least 1-bit data representing a destination point code or an originating point code contained in the message signal.

14. The switch according to claim 12, wherein the additional data is at least 1-bit data representing a service indicator contained in the message signal.

15. The switch according to claims 8, wherein the additional data is at least 1-bit data representing an individual inner code in the switch.
